# EUROPEAN PATENT APPLICATION

(11) **EP 0 798 659 A1**
(43) Date of publication of application: **01.10.1997**
(21) Application number: 97302122.3
(22) Date of filing: 26.03.1997
(51) Int. Cl.: G06K 11/08, G06K 11/18, G02B 27/20, G03B 21/132

(54) **Image generation and display method and apparatus**

(30) Priority: 28.03.1996 US 623604
(71) Applicant: SYMBIOS LOGIC INC., Fort Collins, Colorado 80525 (US)
(72) Inventor: Callicott, Steven P., Colorado Springs, Colorado 80917 (US); Teterwak, Jerzy A., Colorado Springs, Colorado 80917 (US)
(74) Representative: Gill, David Alan

(57) **Abstract**

The present invention provides for a method and apparatus generating and adapting or highlighting a display image. The apparatus includes a computer (12), a digitizer (22) coupled to the computer (12), a projection display panel (16) coupled to the computer (12) and for having an image displayed thereon, a projection device (14) for projecting the image from the projection display panel (16), a display board (18) positioned to receive the image projected by the projection device so as to display the image thereon, and a data input device (28) having a stylus portion (34) mounted to a base (31) for transmitting a signal to the digitizer, and a laser pointer portion (76) mounted to the base (31) for generating a laser beam (46) for use in pointing to the image displayed on the display board (18).

## Description

The present invention generally relates to an image generation and display method and apparatus.

Various methods and technologies have been used to present images to an audience. In one application of these technologies, the video output of a computer running presentation software is sent to a device such as a projection display panel which, in cooperation with an overhead projection device, projects an image onto a display surface such as a projection display board. In this configuration, the computer is typically interfaced with an input device such as a digitizer. The presenter uses a stylus adapted for use with the digitizer to enter data into the computer to alter or revise the image projected onto the projection display board. Once data is entered into the computer with the stylus, and therefore appears on the projection display board, a separate pointing device can be used for highlighting or pointing to the image displayed on the projection display board.

A drawback to the aforementioned method of presenting information is that the presenter must use a first device for entering data into the computer, and then use a second device for pointing to the displayed information. Because two separate devices must be used by the presenter, the method is awkward for the presenter, and therefore detracts from the presentation. Moreover, if the presenter attempts to emphasize displayed information by bringing a stylus into contact with the input device, undesirable "permanent" changes to the displayed image would occur as a result of the interaction of the stylus with the input device.

Another drawback of the above described design is that most input devices, such as digitizers, require close proximity of the presenter to the associated input device in order to enter or change the data presented on the projection display board. The requirement that the presenter remain close to the input device limits his or her freedom of movement during the presentation. Therefore, the ability of the presenter to dynamically capture the attention of the audience is also limited.

As is apparent from the above discussion, there is a need for a convenient method of entering data or information into an input device with a stylus, presenting the information on a projection display board, and then using a pointing device to point to or highlight the image displayed on the projection display board.

As used herein, the highlighting of data or information, or any other such image whether written, drawn or otherwise, means to give prominence to, or point out, the data or information.

In addition, there is also a need for an apparatus and method which permits a presenter to produce a mark on, or annotate an image projected onto a projection display board while freely moving around an area remote from an input device.

The present invention seeks to provide for an image display method and apparatus having advantage over known methods and apparatus.

According to one aspect of the present invention there is provided presentation apparatus having computer means and comprising:
a digitizer coupled to the computer means;
a projection display panel coupled to the computer means for the provision of an image thereon;
projection means for projecting the image from the projection display panel onto display means positioned to receive the image projected by the projection means; and
an input means having a stylus portion for providing a signal to the digitizer, and a laser pointer portion arranged to generate a laser beam for use in pointing to the image displayed on the display means.

According to another aspect of the present invention there is provided a data input device
comprising stylus means mounted to a body portion and for providing a signal to a digitizer associated with a computer; and
laser pointer means mounted to the body portion (31) for generating a laser beam for use in pointing to an object.

Preferably the said body portion includes a housing, the stylus portion is mounted within said housing, and the laser pointer portion is mounted within said housing.

The data input device may further comprise a switch for selectively energizing said laser pointer portion.

Also, the said signal may be transmitted from a first end of the housing, and said laser beam may be transmitted from a second end of the housing.

The data input device may be used as the input means of the apparatus defined above.

According to yet another aspect of the present invention there is provided a method of generating a displaying image comprising the steps of:
moving a stylus portion of a data input device relative to a digitizer of a computer to provide an image on a display associated with the computer;
projecting the image onto display means; and
generating a laser beam by means of a laser pointer portion of the data input device and to be directed towards the image.

The invention also advantageously provides a new and improved method and apparatus for entering data into an input device and displaying the information onto a display surface.

A particularly convenient method of highlighting or pointing to displayed data which is not awkward for a presenter is also advantageously achieved.

Further the present invention can provide a method of highlighting or pointing to displayed data which facilitates the continuity of a presentation and also a convenient method of highlighting displayed information without entering data into an input device.

As a particular advantage, the invention allows for a method and apparatus for entering data into an input device and displaying the information onto a display surface which allows a presenter the freedom to move away from the input device and dynamically capture the attention of an audience.

The invention is described further hereinafter, by way of example only, with reference to the accompanying drawings in which:
FIG. 1 is a schematic diagram of a presentation system embodying the present invention;
FIG. 2 is a perspective view of a digitizing panel taken along the line 2-2 in FIG. 1;
FIG. 3 is a perspective view of stylus/pointing device according to an embodiment of the presentation system shown in FIG. 1;
FIG. 4 is a perspective view of stylus/pointing device according to another embodiment of the presentation system shown in FIG. 1;
FIG. 5 is a schematic diagram of a presentation system according to another embodiment of the present invention;
FIG. 6 is a schematic representation of a first configuration for the display board shown in FIG. 5;
FIG. 7 is a schematic representation of a second configuration for the display board shown in FIG. 5;
FIG. 8 is a schematic representation of a third configuration for the display board shown in FIG. 5; and
FIG. 9 is a schematic representation of a fourth configuration for the display board shown in FIG. 5.

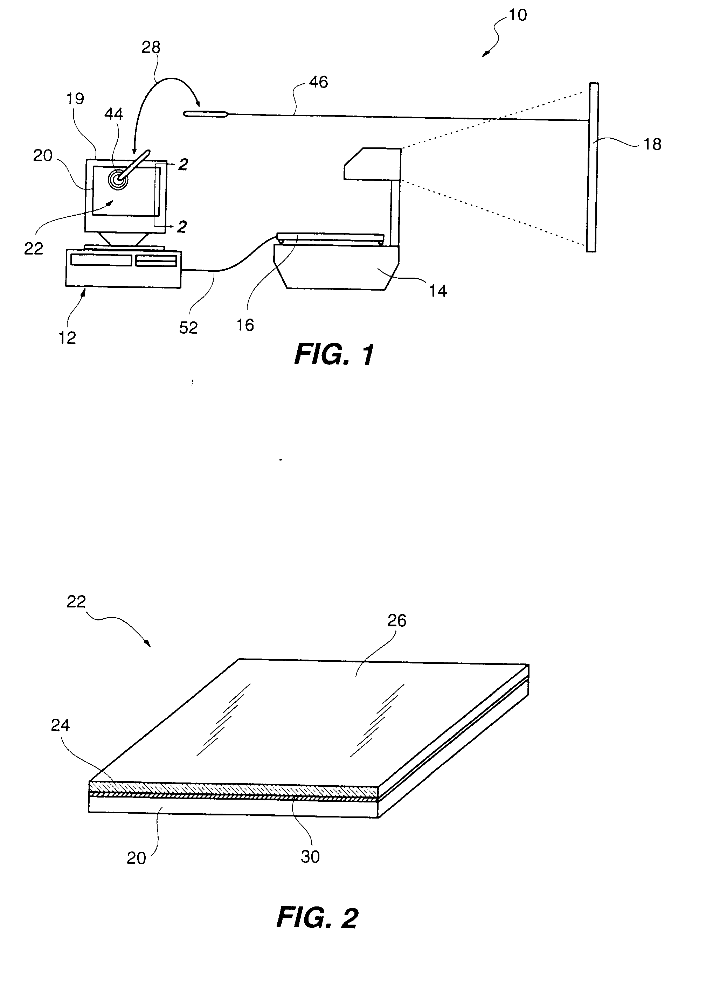

Referring now to FIG. 1, there is shown a schematic diagram of a first embodiment of an information display or presentation system 10 which incorporates the features of the present invention therein. The presentation system 10 includes a computer 12 such as a desktop personal computer. The computer 12 may alternatively be a notebook computer. The presentation system 10 further includes an overhead projection device 14, a projection display panel 16 and a projection display board 18.

The computer 12 may include a conventional display monitor 19 having a display screen 20 such as a cathode ray tube (CRT) or liquid crystal display (LCD), and a digitizing tablet or panel 22 which may be mounted above the display screen 20. As shown in FIG. 2, the digitizing panel 22 may include several layers of material such as a glass layer 24 having an upper surface 26 which defines a writing/touching surface for an object such as an data input device 28 (FIG. 1), and a lower surface having a transparent layer or thin coating 30 of an active sensor material such as indium-tin-oxide (ITO) applied thereto. In operation, a user typically contacts the upper surface 26 of the glass layer 24 with the data input device 28 to enter written data into the computer 10 in a known manner. The computer 10 conventionally replicates the written data or information on the display screen 20 with digital ink (i.e. activated liquid crystal display or fluorescent pixels).

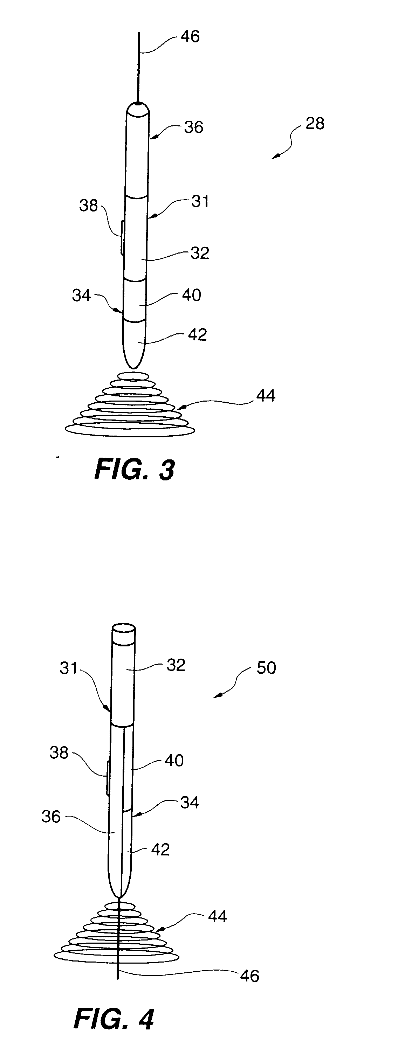

Referring now to FIG. 3, there is shown a perspective view of the data input device 28 for use with the presentation system shown in FIG. 1. In particular, the data input device 28 may be a cordless-type having a housing or base 31 containing at least a battery portion 32, stylus or pen portion 34, a laser pointer portion 36, and one or more control switches 38. The stylus portion 34 includes an oscillator portion 40 and a transmitter portion 42.

The stylus portion 34 is used to enter data into the computer 10 in a known manner. In particular, the battery portion 32 supplies power to the oscillator portion 40 which then stimulates a coil (not shown) associated with the transmitter portion 42 to transmit a signal 44 for use by the computer 12 in determining the position and/or operating mode of the data input device 28. In the embodiment being described, the signal 44 is an AC signal having a frequency of approximately 130 KHz. However, it should be appreciated that the stylus portion 34 may operate in conjunction with either electrostatic or electromagnetic digitizer applications, and may transmit and/or receive signals having frequencies other than those mentioned above.

Data may be entered into the computer 12 by depressing or otherwise closing a contact switch (not shown) mounted in a tip end of the transmitter portion 42 to generate the signal 44. That is, by contacting a tip end of the transmitter portion 42 to the upper surface 26 of the glass layer 24, the data input device 28 generates the signal 44 which may be received by the digitizing panel 22 for use in determining the position and/or operating mode of the data input device 28 in a conventional manner.

The battery portion 32 also supplies power to the laser pointer portion 36 of the data input device 28 when the switch 38 is activated. When energized, the laser pointer portion 36 transmits a laser beam 46 from a second end of the data input device 28. The laser beam 46 may be used for pointing to or otherwise highlighting information projected onto the projection display board 18 as described further below. Thus, a user may use the laser pointer portion 36 to highlight projected data that was previously entered into the computer 12 with the stylus portion 34 of the data input device 28 without requiring the use of two separate devices, namely, a stylus device and a laser pointing device.

FIG. 4 shows an alternative data input device 50 for use with the presentation system shown in FIG. 1. In particular, the data input device 50 is substantially identical to the data input device 28 except that the signal 44 and the laser beam 46 are transmitted from the same end of the data input device 50, as opposed to being transmitted from opposing ends of the data input device 28.

Referring again to FIG. 1, the overhead projection device 14 operates to conventionally enlarge and project images onto the projection display board 18. The known projection display panel 16 rests on the overhead projection device 14 and is connected to the computer 12 through a cable 52 so as to reproduce the image displayed on the display screen 20 in a conventional manner. In particular, the projection display panel 16 may be an active matrix or passive matrix LCD screen which is coupled to a video RAM through a serial or parallel I/O (input/output) port of the computer 12. The overhead projection device 14 conventionally operates to project the display panel image onto the display board 18. As previously mentioned, the image projected onto the display board 18 may be modified by the stylus portion 34 of the data input device 28 (by entering data into the computer 12 through the digitizing panel 22), and may be pointed to with the laser beam portion 36 of the data input device 28.

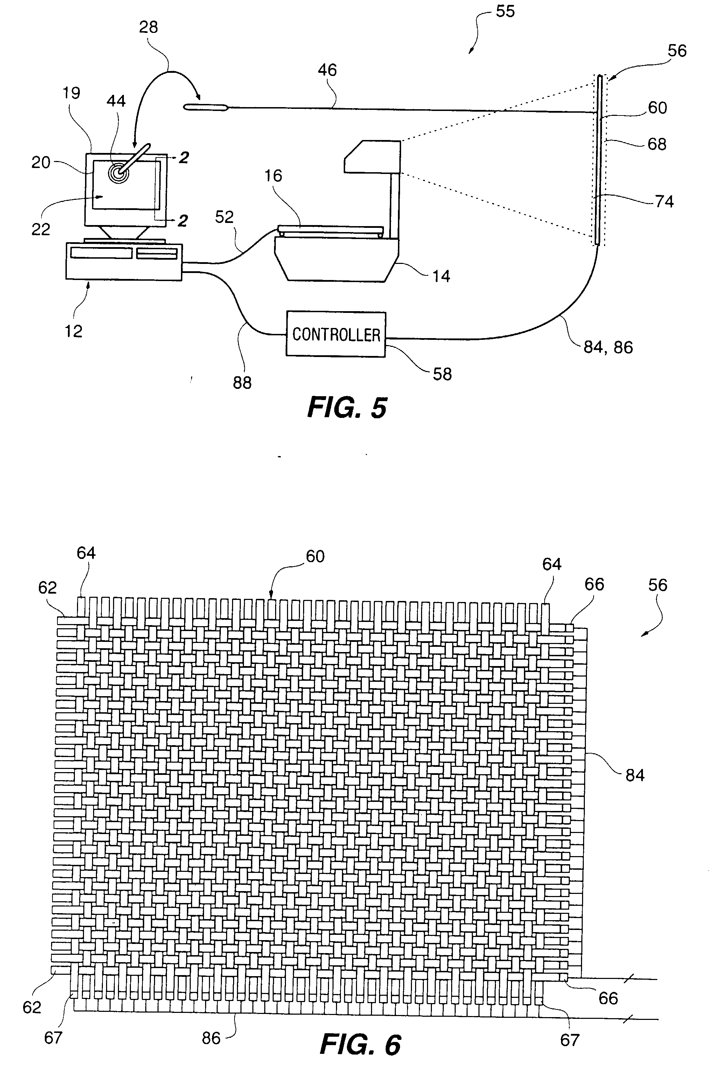

Referring now to FIG. 5, there is shown a schematic diagram of a second embodiment of an information display or presentation system 55 which incorporates the features of the present invention therein. It should be appreciated that the same reference numerals are used to identify elements of the presentation system 55 (FIG. 5) that are common to the presentation system 10 (FIG. 1). In particular, the presentation system 55 includes the computer 12, display monitor 19, digitizing panel 22, data input device 28, overhead projection device 14, and projection display panel 16 as previously described for the presentation system 10. In addition, the presentation system 55 includes a projection display board 56 and a controller 58.

FIG. 6 shows one embodiment of the display board 56 which includes an optical fibre fabric 60 comprising a number of horizontally extending optical fibres 62 which are interwoven with a number of vertically extending optical fibres 64. Each of the horizontally extending optical fibres is terminated with an optical receiver 66, and each of the vertically extending optical fibres is terminated in an optical receiver 67. The optical receivers 66, 67 may be conventional photoelectric transistors which are responsive to a particular wavelength of light received from the respective optical fibre. For example, the optical receivers 66, 67 may be responsive to the particular light frequency emitted from the laser portion 36 of the data input device 28. The display board 56 may also include a substrate 68 (FIG. 5) for supporting the optical fibre fabric, and for providing additional rigidity to the display board 56.

In operation, the display screen image that is projected from the overhead projection device 14 may be projected onto the optical fibre fabric 60 for viewing by an audience. The laser pointer portion 36 of the input display device 28 may be used to annotate the image projected onto the optical fibre fabric 60. In particular, the laser beam 46 impinges the optical fibre fabric 60 and enters one or more optical fibres 62, 64 when the laser beam 46 is directed at the display board 56. Once the laser beam 46 enters an optical fibre 62, 64, the laser beam 46 then travels or is optically coupled or transmitted to the boundary of the particular optical fibre where the laser beam 46 is received by the respective optical receiver 66, 67. It should be appreciated that depending upon the area of the laser beam 46 and the diameter of the optical fibres 62, 64, the laser beam 46 emitted from the input display device 28 may fall upon one or more optical fibres 62, 64 and be optically coupled to the corresponding optical receivers 66, 67.

That is, if the laser beam 46 falls upon a vertical optical fibre 64, the laser beam 46 will be coupled to the optical receiver 67 associated with the particular vertical optical fibre 64, and will also be coupled to the optical receiver 66 associated with the particular horizontal optical fibre 62 positioned directly behind that vertical optical fibre 64. Likewise, when the laser beam 46 falls upon a horizontal optical fibre 62, the laser beam 46 will be coupled to the optical receiver 66 associated with the particular horizontal optical fibre 62, and will also be coupled to the optical receiver 67 associated with the particular vertical optical fibre 64 positioned directly behind that horizontal optical fibre 62.

The ratio between the area of the laser beam pattern and the diameters of the optical fibres 62, 64 may permit the laser beam 46 to simultaneously fall upon a number of horizontal and vertical optical fibres 62, 64. In such a case, different algorithms may be implemented in the controller 58 for determining the position of the laser beam 46 relative to the optical fibre fabric 60. In particular, a conventional averaging algorithm may be used to determine a centre position of the laser beam 46 relative to the optical fibres 62, 64 that are receiving the laser beam 46.

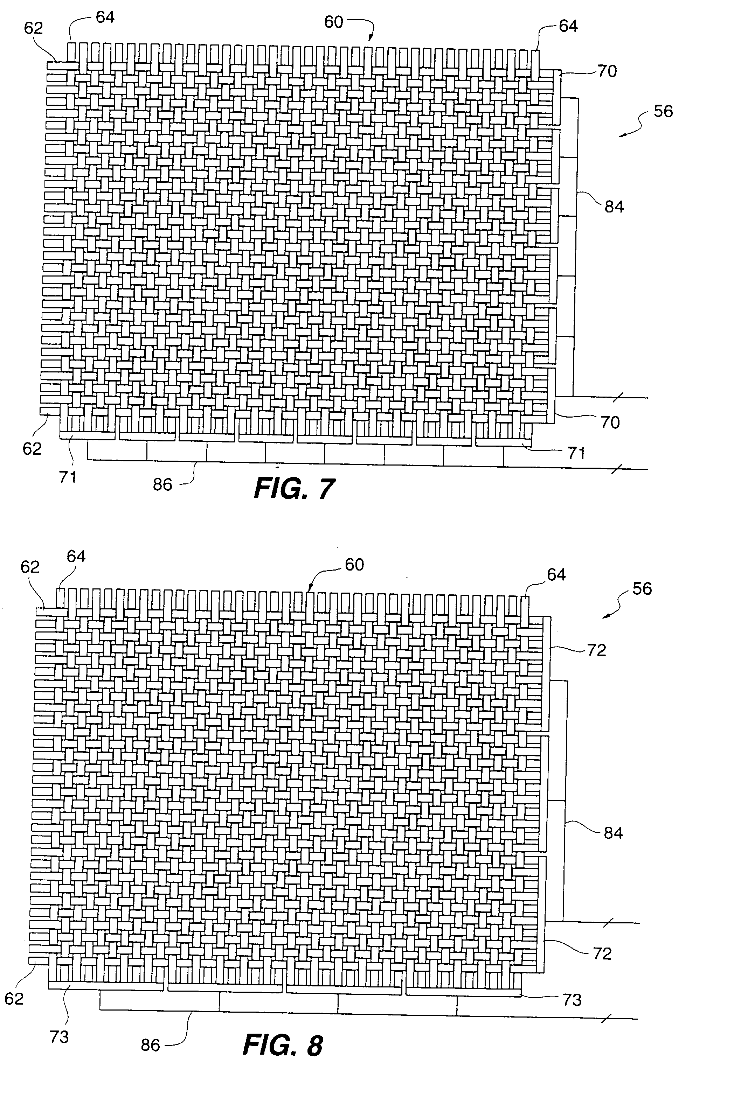

Where the resolution (accuracy of laser beam position determination) of the display board 56 is not important, the number of optical receivers 66, 67 may be reduced as shown in FIG. 7 in order to reduce costs. As shown in FIG. 7, the optical fibre fabric 60 is segmented into groups of optical fibres 62, 64 wherein each group of horizontal optical fibres is terminated by one optical receiver 70, and each group of vertical optical fibres is terminated by one optical receiver 71. In particular, each optical receiver 70, 71 of display board 56 terminates five (5) optical fibres 62, 64. Thus, each optical receiver 70, 71 generates an output indicative of the presence of the laser beam 46 if the laser beam 46 impinges upon any one of the five optical fibres 62, 64 that terminate to the respective optical receiver 70, 71. It should be appreciated that the resolution of the display board 56 shown in FIG. 6 is greater than the resolution of the display board 56 shown in FIG. 7 because each optical fibre 62, 64 of the display board 56 shown in FIG. 6 terminates at one optical receiver 66, 67.

The number of optical receivers 66 may be reduced even further by forming larger groups of optical fibres 62, 64. As shown in FIG. 8, the optical fibre fabric 60 is segmented into groups of ten (10) optical fibres 62, 64 with each horizontal optical fibre group is terminated with one optical receiver 72, and each vertical optical fibre group is terminated with one optical receiver 73. It should be appreciated that the cost of the display board 56 may be controlled by grouping any number of optical fibres 62, 64 together for termination at a single optical receiver.

If desired, the display board 56 may also include a display surface or layer 74 (FIG. 5) which is positioned over the optical fibre fabric 60 for enhanced viewing of the projected image. The display surface 74 permits at least a portion of the laser beam 46 to pass through to the optical fibre fabric 60 for determining the position of the laser beam 46 relative to the optical fibre fabric 60 in the same manner as described above. The display surface 74 may be formed from any suitable material preferably having of a translucent property.

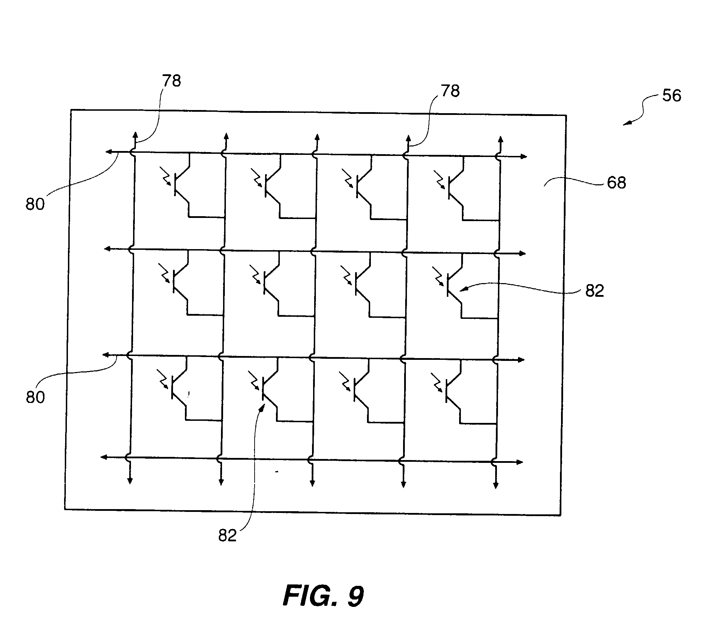

FIG. 9 shows another embodiment of the display board 56 which includes a number of vertical sense wires 78, horizontal sense wires 80 and photoelectric transistors 82 mounted on the substrate 68. In particular, each transistor 82 has a collector terminal thereof connected to a horizontal sense wire 80, and an emitter terminal thereof connected to a vertical sense wire 78. The transistors 82 are only sensitive to the wavelength and amplitude of the laser beam 46. When a transistor 82 is excited by the laser beam 46, the transistor 82 will saturate or conduct in a known manner and cause the horizontal sense wire 80 connected to the collector terminal to short to the vertical sense wire 78 connected to the emitter terminal.

It should be appreciated that it is not important what signals or voltages are carried on the vertical and horizontal sense wires 78, 80. What is important is that the change in the signals or voltage levels as a result of the sense wires electrically shorting together can be detected by the optical receivers coupled to the vertical and horizontal sense wires 78, 80 at the boundary of the display board 56. The optical receivers may then be polled or scanned to determine the position of the laser beam impingement on the display board 56 in the same manner as discussed above. As with the optical fibre fabric 60, the area of the laser beam 46 and the spacing between photoelectric transistors 82 may permit the laser beam 46 to impinge on, or cover more than one transistor 82. In this case, algorithms may be implemented in the controller 58 for determining a central position of the laser beam 46 relative to the conducting transistors 82.

As shown in FIG. 5, the controller 58 is connected to the display board 56 through lines 84 and 86. In particular, line 84 couples the controller 58 to the optical receivers 66 associated with the horizontal optical fibres 62, and line 86 couples the controller 58 to the optical receivers 67 associated with the vertical optical fibres 64. It should be appreciated that lines 84, 86 may comprise dedicated wires coupling each optical receiver 66, 67 to an input of the controller 58. However, one or more multiplexers (not shown) may be coupled to the outputs of the optical receivers 66, 67 in a known manner to reduce the number of inputs to the controller 58. The controller 58 is coupled to the computer 12 through a line 88. Alternatively, the controller 58 may be positioned on an adapter board (not shown) which is operatively coupled to an I/O bus within the computer 12 in a known manner. It should be appreciated that the controller 58 may be embodied as a custom integrated circuit or as a number of discrete components on a component board (not shown).

The function of the controller 58 is to scan or poll the optical receivers 66, 67 to produce an X, Y coordinate pair(s) indicative of a position of the laser beam 46 relative to the optical fibre fabric 60. The resulting X, Y coordinate pair(s) may be passed to the computer 12 on line 88 in accordance with any known data communication protocol (e.g. serial or parallel). As previously mentioned, the resolution of the laser beam may be less than the resolution of the optical fibre fabric 60. Thus, more than one optical receiver 66 associated with the horizontal optical fibres 62, and more than one optical receiver 67 associated with the vertical optical fibres 64 may be activated (e.g. providing an active high or an active low output). In such case, the controller 58 may determine a weighted centre of the laser beam impingement to report to the computer 12.

The computer 12 may use the X, Y coordinate position data from the controller 58 to modify the image that is displayed on the display screen 20 and projected onto the display board 56, in a conventional manner. For instance, the computer 12 may conventionally position a cursor at the location identified by the X, Y coordinate position reported to the computer 12. In addition, the computer 12 may perform other known editing functions such as underlining, highlighting, or deleting the location(s) identified by the X, Y coordinate position.

It should be appreciated that the display board 56 may have a number of optical receivers 66, 67 which are responsive or sensitive to different light frequencies. Thus, to facilitate audience participation, the display board 56 may be responsive to different pointing devices each transmitting a laser beam of a different frequency.

While the invention has been illustrated and described in detail in the drawings and foregoing description, such illustration and description is to be considered as exemplary and not restrictive in character, it being understood that the invention is not restricted to the details of the foregoing embodiments.

## Claims

1. Presentation apparatus having computer means (12) and comprising:
a digitizer (22) coupled to the computer means (12);
a projection display panel (16) coupled to the computer means (12) for the provision of an image thereon;
projection means (14) for projecting the image from the projection display panel (16) onto display means (18, 56) positioned to receive the image projected by the projection means (14); and
an input means (28) having a stylus portion (34) for providing a signal to the digitizer (22), and a laser pointer portion (36) arranged to generate a laser beam (46) for use in pointing to the image displayed on the display means (28).

2. Apparatus as claimed in claim 1, wherein:
the display means (18, 56) includes a sensor layer (56) responsive to the laser beam (46); and further includes a controller (58) for polling the sensor layer (56) to determine a position of the laser beam (46) relative to the sensor layer (56).

3. Apparatus as claimed in claim 2, wherein:
the sensor layer (56) includes a fibre optic fabric having a first plurality of optical fibres (62) oriented in a first direction which are interwoven with a second plurality of optical fibres (64) which are oriented in a second direction; and
wherein the display means (56) further includes a plurality of optical receivers (66,67) coupled to the fibre optic fabric.

4. Apparatus as claimed in claim 3, wherein each of the first and second plurality of fibres (62, 64) terminate at a separate optical receiver (66, 67).

5. Apparatus as claimed in claim 2, wherein the sensor layer (56) comprises:
a substrate (68);
a first plurality of sense lines (78) mounted on the substrate (56);
a second plurality of sense lines (80) mounted on the substrate (56) ;
a plurality of photosensitive semiconductor devices (82) each having a first terminal thereof connected to a first sense line (78), and a second terminal thereof connected to a second sense line (80); and
a plurality of optical receivers coupled to the plurality of sense lines.

6. A data input device (28)
comprising stylus means (34) mounted to a body portion (31) and for providing a signal to a digitizer associated with a computer; and
laser pointer means (36) mounted to the body portion (31) for generating a laser beam for use in pointing to an object.

7. A device as claimed in claim 8, wherein the stylus means (34) includes:
a battery for powering said stylus portion,
an oscillator for generating said signal,
a transmitter for transmitting said signal to said digitizer, and the device further comprises a switch (38) for selectively energizing said laser pointer portion.

8. A device of as claimed in claim 6 to 7, wherein said signal and said laser beam are both transmitted from a first end of said body portion.

9. A method of generating a displayed image comprising the steps of:
moving a stylus portion (34) of a data input device (28) relative to a digitizer (22) of a computer (12) to provide an image on a display associated with the computer;
projecting the image onto display means (18); and
generating a laser beam (46) by means of a laser pointer portion (36) of the data input device (28) and to be directed towards the image.

10. A method as claimed in claim 9, and including the use of an apparatus or device as claimed in any one of claims 1 to 8.
